# EUROPÄISCHE PATENTSCHRIFT

(11) **EP 1 079 951 B1**
(45) Veröffentlichungstag und Bekanntmachung des Hinweises auf die Patenterteilung: **24.10.2001**
(21) Anmeldenummer: 99934509.3
(22) Anmeldetag: 15.05.1999
(51) Int. Cl.: B23P 19/04, G05B 19/401, B23Q 17/20, E05D 3/00

(54) **VERFAHREN ZUM HERSTELLEN VON GELENKEN**
METHOD FOR PRODUCING ARTICULATED JOINTS
PROCEDE DE PRODUCTION D'ARTICULATIONS

(30) Priorität: 18.05.1998 DE 19822204
(43) Veröffentlichungstag der Anmeldung: 07.03.2001
(73) Patentinhaber: ED. Scharwächter GmbH, 42855 Remscheid (DE)
(72) Erfinder: MUELLER, Arndt, D-42389 Wuppertal (DE); GOHRBANDT, Uwe, D-42781 Haan (DE); OTTE, Viktor, D-42657 Solingen (DE); OTTE, Ralf, D-69469 Weinheim (DE)
(74) Vertreter: Sparing, Rolf Klaus
(86) Internationale Anmeldenummer: DE9901475
(87) Internationale Veröffentlichungsnummer: WO9959771

(56) Entgegenhaltungen:
- EP-A- 0 317 539
- EP-A- 0 499 443
- DD-A- 260 179
- DE-A- 4 102 899
- DE-A- 19 522 503
- PATENT ABSTRACTS OF JAPAN vol. 017, no. 618 (M-1510), 15. November 1993 (1993-11-15) & JP 05 192846 A (NISSAN MOTOR CO LTD), 3. August 1993 (1993-08-03)

## Beschreibung

Die Erfindung betrifft ein Verfahren nach dem Oberbegriff des Anspruchs 1.

Aus der Praxis ist bekannt, mit einer Lagerung durch Buchsen aus einem wartungsfreien Lagermaterial ausgestattete Scharniere, vor allem für Kraftwagentüren, derart zusammenzusetzen, daß eine ein Schamierauge bildende Lagerbohrung einer Schamierhälfte mit vorzugsweise als Kragenbuchsen ausgebildeten Lagerbuchsen aus einem wartungsfreien Lagermaterial ausgekleidet und anschließend ein die Gelenkachse bildender Scharniergelenkstift in die mit den Lagerbuchsen ausgekleidete Lagerbohrung eingetrieben wird. Der Scharniergelenkstift weist dabei gegenüber dem lichten Durchmesser der in die Lagerbohrung eingesetzten Lagerbuchsen ein gewisses Übermaß auf, woraus sich ein gewisses Schwenkmoment des Gelenks einstellt. Da das Schwenkmoment in Abhängigkeit von der Summe der Toleranzen der Einzelteile schwankt, erfordert die Fertigung eines Gelenks bzw. eines Scharniers mit einem nur in engen Grenzen schwankenden Schwenkmoment ein aufwendiges manuelles Sortieren und Vermessen oder eine hochpräzise Fertigung, die für Massenprodukte nicht wirtschaftlich ist.

Aus der Praxis des Einsetzens von Lagerbuchsen in Lagerbohrungen, z.B. eines Schamierauges, ist ferner bekannt, die Lagerbuchsen mittels eines Kalibrierdornes in die Lagerbohrung einzuführen. Hierzu wird stets ohne Rücksicht auf eventuelle Toleranzen in der Lagerbohrung oder der Wandstärke der Lagerbuchsen derselbe Kalibrierdorn vorgesehen, so daß sich insbesondere durch die Toleranzen des einzusetzenden Stiftes immer noch ein innerhalb weiter Grenzen streuendes Schwenkmoment der Gelenke bzw. der Scharniere ergibt. Diese Streuung ist unerwünscht und führt in der Serienfertigung zu einem erhöhten Aufwand an Sortierung vor oder nach der Montage der Gelenke.

Aus der Praxis ist ferner bekannt, fiir die Herstellung von Scharnieren den Scharnierstift selbst als Kalibrierdorn auszubilden und an seinem in Eintreibrichtung vorne liegenden Ende mit einer die Kalibrierung der Lagerbuchsen erleichternden Form auszustatten, beispielsweise mit einem Andruckrand und/oder mit einer glättende Teilkugelform. Mit dieser Maßnahme kann zwar auf eine Vereinheitlichung des resultierenden Schwenkmoments hingewirkt werden, allerdings ist es nicht möglich, das Schwenkmoment in Serienfertigung gezielt zu beeinflussen oder gar abweichend von dem einheitlichen Moment zu gestalten. Ferner erfordert dieses Verfahren für den einmalig als Dorn vorgesehenen Scharnierstift eine zusätzliche Bearbeitung seiner Spitze und zumeist auch ein festeres Material als für seine eigentliche Funktion unbedingt erforderlich, wodurch dieses Verfahren wenig wirtschaftlich ist.

Es ist die Aufgabe der Erfindung, ein Verfahren nach dem Oberbegriff des Anspruchs 1 zum Herstellen von Gelenken, insbesondere von Dreh- oder Schwenkgelenken wie Scharnieren für Kraftwagentüren, anzugeben, mit dem Gelenke mit beliebig einstellbaren Momenten auf automatisch arbeitenden Maschinen kostengünstig gefertigt werden können.

Diese Aufgabe wird bei dem eingangs genannten Verfahren erfindungsgemäß mit den kennzeichnenden Merkmalen des Anspruchs 1 gelöst.

Das erfindungsgemäße Verfahren ermöglicht es, Gelenke aus den vorgefertigten Teilen derart zusammenzubauen, daß vorzugsweise ohne vorheriges Sortieren und Kommissionieren die angelieferten Teile jeweils zusammengebaut werden, wobei eine gegebenenfalls erforderliche Bearbeitung der Teile bei Bedarf erfolgen kann, wobei das für die Bearbeitung vorgegebene Sollmaß bereits im Hinblick auf das erwünschte Moment bzw. den erwünschten Dreh- bzw. Schwenkwiderstand des Gelenks ausgewählt wird. Hierdurch kann - falls erforderlich - jedes Gelenk mit einer sehr geringen Momententoleranz hergestellt werden, wodurch z.B. bei Scharnieren, die in großen Serien hergestellt werden, beispielsweise für Kraftfahrzeugtüren, eine gleichmäßig gute und reproduzierbare Qualität erzielt wird. Darüber hinaus sinkt die Ausschußquote, da durch das gezielte Bearbeiten auch solche Teile zu funktionierenden Scharnieren zusammengebaut werden können, die bereits außerhalb der Fertigungstoleranz der jeweils vorgefertigten Teile liegen. Eine Vorsortierung der Teile, die bei regelloser Anlieferung der Teile zeit- und platzaufwendig ist, ist nicht erforderlich.

Die im ersten Verfahrensschritt zu ermittelnden tatsächlichen Istmaße sind vorzugsweise der Bohrungsinnendurchmesser, die Wandstärke der Lagerbuchsen und der Durchmesser des Gelenkstiftes. Diese Istmaße werden mit für die Erzielung eines gewünschten Momentes, beispielsweise Schwenkmomentes, ausschlaggebenden Werten, insbesondere einem Über- oder Untermaßes der kalibrierten lichten Weite der in die Lagerbohrung eingesetzten Lagerbuchsen, gegenüber dem Istmaß des Durchmessers des Gelenkstifts in ein Verhältnis gesetzt, um unter Berücksichtigung der möglicherweise vorliegenden positiven oder negativen Toleranzsummen dem zugehörigen gegenüber wenigstens ein exakt bemessenes, Über- oder Untermaß des lichten Durchmessers der in die Lagerbohrung eingesetzten Lagerbuchsen sicherzustellen. Damit ermöglicht das erfindungsgemäße Verfahren die Vorgabe eines beliebigen Schwenkmomentes, wobei die Vorgabe darüber hinaus ohne weitere Eingriffe in den Herstellungsprozeß geändert werden kann.

In einer für die praktische Durchführung des vorstehend aufgezeigten Verfahrens vorteilhaften Weiterbildung kann noch vorgesehen werden, daß in einem zwischen den ersten und den zweiten Verfahrensschritt eingeschalteten weiteren Verfahrensschritt die im ersten Verfahrensschritt ermittelten tatsächlichen Abmessungen mit den jeweils zugelassenen Toleranzen verglichen werden, was in manchen Fällen das Auffinden des für die Erzielung eines bestimmten Schwenkmomentes erforderlichen lichten Durchmessers der kalibrierten Lagerbuchsen und damit des hierfür einzusetzenden, in der Maschine vorhandenen Kalibrierdornes erleichtern kann bzw. im Interesse einer Erhöhung der Sicherheit, mit welcher der geeignetste Kalibrierdorn aufgefunden und eingesetzt wird, zweckmäßig sein kann.

Vorzugsweise ist vorgesehen, daß hinsichtlich der Bemessung des für die Erzielung eines bestimmten Schwenkmomentes im Verhältnis zum Ist-Durchmesser des Gelenkstiftes einzustellenden lichten Durchmessers der kalibrierten Lagerbuchsen in Abhängigkeit von der Wandungsstärke der Lagerbuchsen ein Zu- oder Abschlag vorgesehen wird.

Zwar gibt es hinsichtlich der für die Erzielung eines gewünschten Schwenkmomentes ausschlaggebenden Kriterien absolute Größen, deren absolute Ermittlung und Einhaltung jedoch einen nicht tragbaren Aufwand erfordern würde. In weiterer Ausgestaltung der Erfindung wird daher vorgeschlagen, daß die in den beiden ersten Verfahrensschritten ermittelten Werte mit einem für die Erlangung eines bestimmten Schwenkmomentes des Schwenkgelenkes maßgebenden Erfahrungswert bzw. einem statischen Wert verglichen werden und daß für die Ermittlung eines für die Erlangung eines bestimmten Schwenkmomentes des Schwenkgelenkes maßgebenden Erfahrungswertes sog. neuronale Netzwerke eingesetzt werden. Als Erfahrungswert ist hier derjenige Bereich von möglichen Kombinationen im Verhältnis von Buchsenwandstärke und lichter Weite der kalibrierten Buchse zu einem gegebenem Durchmesser des Scharnierstiftes zu verstehen, innerhalb dessen die Einhaltung eines gewünschten Schwenkmomentes noch mit hinreichender Genauigkeit gewährleistet werden kann.

Die Erlangung der Kenntnis der Auswirkung der einzelnen Kriterien bzw. des Einflusses einzelner Kriterien für die Vergrößerung oder Verkleinerung des Schwenkmomentes erfolgt vorzugsweise durch den Einsatz lernender elektronischer Schaltungen bzw. Rechner, die anhand einer Anzahl bzw. Vielzahl gemessener Ausgangswerte einer Anzahl von Teilen und anhand des aus dem beim Zusammenfügen dieser Teile resultierenden Schwenkmoment einen statistischen Erfahrungswert ermitteln, welcher noch zu einer Einhaltung eines vorgegebenen Schwenkmomentes führt. Dies vereinfacht die Ausbildung der zur Durchführung des erfindungsgemäßen Verfahrens einzusetzenden Vorrichtung bzw. automatisch arbeitenden Maschine und ferner den zu deren Betrieb erforderlichen Installationsaufwand dahingehend, daß sich die Vorrichtung oder Maschine den sich aus verschiedenen Größen eines Schwenkgelenkes bzw. Scharniers und damit den sich aus unterschiedlichen Größen von Scharnierstiften und Lageraugen ergebenden Variationen in den für die Einhaltung eines gleichbleibenden vorgegebenen Schwenkmomentes ausschlaggebenden Kriterien selbsttätig anpassen kann.

Gemäß einer bevorzugten Weiterbildung der Erfindung ist vorgesehen, daß an die automatisch arbeitende Maschine ausgegebene Steuerbefehle das Maß der Verformung der Lagerbuchsen vorgeben, wobei sich die von der Steuereinrichtung an die automatisch arbeitende Maschine ausgegebenen Steuerbefehle jeweils auf die Auswahl eines Bearbeitungswerkzeuges und/oder die Steuerung dessen Kraftbeaufschlagung beziehen, insbesondere dahingehend, daß sich der an die automatisch arbeitende Maschine ausgegebene Steuerbefehl auf die Auswahl eines Kalibierdornes für die Kalibrierung der Lagerbuchsen bezieht.

Vorteilhafterweise verfügt die automatisch arbeitende Maschine über einen Satz von mehreren Kalibrierdornen unterschiedlicher Durchmesser, die in Abhängigkeit von den für die jeweils zu einem Gelenk zusammenzufügenden Teilen ermittelten Istmaßen wahlweise zum Einsatz gebracht werden können.

Hierbei erfolgt die Auswahl des Kalibrierdorndurchmessers in Abhängigkeit von dem für den Gelenkstift ermittelten Istmaß, wobei der lichte Durchmesser der kalibrierten Lagerbuchsen ein gewisses und stets gleichbleibendes Untermaß gegenüber dem jeweils gegebenen Gelenkstiftdurchmesser aufweist.

Die Kalibrierung der Buchsen erfolgt demgemäß jeweils mit einem für die Erzielung eines gewünschten Schwenkmomentes charakteristischen Untermaß gegenüber dem ermittelten Istmaß des Gelenkstiftes, was bei zumindest teilweise aus einem formerholungsfähigen Material oder einem Memorymaterial bestehenden Lagerbuchsen auch dadurch erreicht werden kann, daß, falls für die Lagerung des Gelenkstiftes wenigstens zu einem Teil aus einem formerholungsfähigen Material bestehende Buchsen verwendet werden, die Lagerbuchsen mit einem für die Erzielung eines gewünschten Schwenkmomentes charakteristischen Übermaß gegenüber dem ermittelten Istmaß des Gelenkstiftes kalibriert werden. Hierbei ist als ausschlaggebende Größe für die zu kalibrierende lichte Weite der Lagerbuchsen deren tatsächlicher lichter Durchmesser in einem Zeitraum von 20 oder mehr Sekunden nach der Kalibrierungsmaßnahme einzusetzen.

## Patentansprüche

1. Verfahren zum Herstellen von Gelenken durch Zusammenbau von vorgefertigten Teilen, umfassend einen eine Achse definierenden Stift, auf den wenigstens ein anzulenkendes Teil mit einer Lageraugenbohrung mittels einer Lagerbuchse schwenkbar zu lagern ist, bei dem die Teile regellos angeliefert werden und automatisch auf einer Maschine zu Gelenken bei Bedarf bearbeitet und zusammengebaut werden,
**gekennzeichnet durch** die Schritte
Ermitteln der tatsächlichen Istmaße von Lageraugenbohrung, Stift und wenigstens einer der beiden Lagerbuchsen;
Vergleichen der ermittelten Istmaße und von hieraus abgeleiteten Werten, insbesondere Verhältnissen, mit Schwellenwerten, die im Hinblick auf ein beabsichtigtes Ergebnis voreinstellbar sind; und
Ausgeben von Steuerbefehlen an die automatisch arbeitende Maschine hinsichtlich der Bearbeitung wenigstens eines der Teile vor Zusammenbau der Teile.

2. Verfahren nach Anspruch 1, bei dem nach dem Ermitteln der Istmaße diese ferner mit jeweils zugelassenen Toleranzen verglichen werden.

3. Verfahren nach Anspruch 1 oder 2, bei dem die Schwellenwerte, mit denen die ermittelten Istmaße verglichen werden, durch gespeicherte Erfahrungswerte bei der Erlangung eines bestimmten Drehwiderstandes, ausgehend von bekannten Maßen zusammengebauter Gelenke, voreingestellt werden.

4. Verfahren nach Anspruch 3, bei dem die Erfahrungswerte unter Einsatz eines neuronalen Netzwerks ermittelt und dann gespeichert werden.

5. Verfahren nach einem der Ansprüche 1 bis 4, bei dem an die automatisch arbeitende Maschine das Maß der Verformung der Lagerbuchsen bestimmende Steuerbefehle ausgegeben werden.

6. Verfahren nach einem der Ansprüche 1 bis 5, bei dem sich die von der Steuereinrichtung an die automatisch arbeitende Maschine ausgegebenen Steuerbefehle jeweils auf die Auswahl eines Bearbeitungswerkzeuges und dessen Kraftbeaufschlagung beziehen.

7. Verfahren nach einem der Ansprüche 1 bis 6, **dadurch gekennzeichnet, daß** sich die an die automatisch arbeitende Maschine ausgegebenen Steuerbefehle auf die Auswahl eines Kalibrierdornes für die Kalibrierung der Lagelbuchsen beziehen.

8. Verfahren nach einem der Ansprüche 1 bis 7, bei dem die automatisch arbeitende Maschine eine Mehrzahl von Kalibrierdornen unterschiedlicher Durchmesser umfaßt, wobei die Auswahl eines bestimmten Kalibrierdomes in Abhängigkeit von dem für die jeweils zu einem Gelenk zusammenzufügenden Teilen ermittelten Istmaß des Stiftes erfolgt.

9. Verfahren nach einem der Ansprüche 1 bis 8, bei dem eine Kalibrierung der Buchsen auf ein solches Sollmaß vorgenommen wird, das gegenüber dem ermittelten Istmaß des Stiftes einem im Hinblick auf das gewünschte Moment bzw. auf den gewünschten Widerstand geeignetes charakteristischem Untermaß entspricht.

10. Verfahren nach Anspruch 9, bei dem das Untermaß der Kalibrierung der Buchse gegenüber dem Istmaß des Stiftes derart ermittelt wird, daß einem kalibrierten Buchsendurchmesser stets eine Größe zur gleichzeitigen Berücksichtigung der Buchsenwandstärke zugeordnet wird, die gemäß der statistischen Verteilung ausgewählt wird.

11. Verfahren nach einem der Ansprüche 1 bis 10, bei dem das Material, aus dem die Lagerbuchsen wenigstens zum Teil bestehen, ausgewählt ist aus der Gruppe umfassend formerholungsfähige Materialien und Memorymaterial.

12. Verfahren nach Anspruch 10, bei dem die lichte Weite der Buchse aus formerholungsfähigem Material mit einem für die Erzielung eines gewünschten Momentes charakteristischen Übermaß gegenüber dem ermittelten Istmaß des Stiftes kalibriert wird, welches so ausgewählt wird, daß sich aus der Formerholung der Lagerbuchsen nach einer vorbestimmten Zeitspanne ein beabsichtigtes Untermaß gegenüber dem Istmaß des Stifts ergibt.

13. Verfahren nach einem der Ansprüche 1 bis 12, bei dem das hergestellte Gelenk ein Drehgelenk ist.

14. Verfahren nach einem der Ansprüche 1 bis 12, bei dem das hergestellte Gelenk ein Schwenkgelenk ist.

15. Verfahren nach einem der Ansprüche 1 bis 12, bei dem das hergestellte Gelenk ein Kraftfahrzeugscharnier ist.

## Claims

1. Method for producing joints by assembling prefabricated parts comprising a pin which defines an axis and on which at least one part which is to be articulated and has a bearing socket can be mounted pivotably by means of a bearing bushing, in which the parts are delivered randomly and are automatically machined and assembled on a machine to form joints as required,
**characterized by** the steps
determining the actual dimensions of the bearing socket, pin and at least one of the two bearing bushings;
comparing the actual dimensions determined and values derived therefrom, in particular ratios, with threshold values which can be preset with regards to an intended result; and
issuing control commands to the automatically operating machine with regard to the machining of at least one of the parts before assembling the parts.

2. Method according to claim 1, in which after the actual values are determined, the latter are furthermore compared with tolerances which are permitted in each case.

3. Method according to claim 1 or 2, in which the threshold values with which the actual values which have been determined are compared are preset, starting from known dimensions of assembled joints, by stored empirical values for the attaining of a certain rotational resistance.

4. Method according to claim 3, in which the empirical values are determined using a neuronal network and are then stored.

5. Method according to one of claims 1 to 4, in which control commands determining the extent of deformation of the bearing bushings are issued to the automatically operating machine.

6. Method according to one of claims 1 to 5, in which the control commands which are issued by the control device to the automatically operating machine each relate to the selection of a machining tool and its power capacity.

7. Method according to one of claims 1 to 6, **characterized in that** the control commands issued to the automatically operating machine relate to the selection of a calibrating mandrel for calibrating the bearing bushings.

8. Method according to one of claims 1 to 7, in which the automatically operating machine comprises a plurality of calibrating mandrels of differing diameter, the selection of a certain calibrating mandrel taking place as a function of the actual pin dimension determined for the parts which are to be joined together in each case to form a joint.

9. Method according to one of claims 1 to 8, in which the bushings are calibrated to a desired dimension, which, as compared with the actual dimension which has been determined for the pin, corresponds to a suitable, characteristic undersize with regard to the desired moment or the desired resistance.

10. Method according to claim 9, in which the undersize of the calibration of the bushing as compared with the actual dimension of the pin is determined in such a manner that a calibrated bushing diameter is always assigned an amount for simultaneously taking into consideration the bushing wall thickness, which is selected in accordance with the statistical distribution.

11. Method according to one of claims 1 to 10, in which the material of which the bearing bushings at least partially consist is selected from the group comprising materials capable of recovering their shape and memory material.

12. Method according to claim 10, in which the clear width of the bushing of material capable of recovering its shape is calibrated, as compared with the actual dimension which has been determined for the pin, with a characteristic oversize for obtaining a desired moment wherein the oversize is selected in such a manner that an intentional undersize as compared to the actual dimension of the pin is obtained after a predetermined period from the shape recovery of the bearing bushing.

13. Method according to one of claims 1 to 12, in which the joint which is produced is a rotating joint.

14. Method according to one of claims 1 to 12, in which the joint produced is a pivoting joint.

15. Method according to one of claims 1 to 12, in which the joint produced is a motor-vehicle hinge.

## Revendications

1. Procédé de production d'articulations, par assemblage de pièces préfabriquées, comprenant, une tige définissant un axe, sur laquelle doit être montée, au moyen d'un coussinet de palier, au moins une partie à articuler à pivotement, comportant un perçage formant oeillet de palier, dans lequel les parties sont fournies sans règle et sont automatiquement usinées, en cas de besoin, et assemblées, sur une machine, pour former des articulations,
**caractérisé par** les étapes consistant à :
déterminer la cote réelle effective du perçage d'oeillet de palier, de la tige d'au moins l'un des deux coussinets de palier ;
comparer les cotes réelles déterminées et des valeurs en étant dérivées, en particulier des rapports, à des valeurs seuils, qui sont préréglables eu égard à un résultat envisagé ; et
émettre pour la machine travaillant de façon automatique des ordres de commande quant à l'usinage d'au moins l'une des parties, avant l'assemblage des parties.

2. Procédé selon la revendication 1, pour lequel, après la détermination de la cote réelle, celle-ci est en outre comparée chaque fois à des tolérances admises.

3. Procédé selon la revendication 1 ou 2, dans lequel les valeurs de seuil auxquelles sont comparées les cotes réelles déterminées sont préréglées à l'aide de valeurs expérimentales mémorisées, lors de l'obtention d'une résistance en rotation déterminée, en partant de valeurs connues, correspondant à des articulations assemblées.

4. Procédé selon la revendication 3, dans lequel les valeurs expérimentales sont déterminées en utilisant un réseau neuronal, puis sont mémorisées.

5. Procédé selon l'une des revendications 1 à 4, dans lequel des ordres de commande, déterminant la valeur de la déformation des coussinets de palier, sont, envoyés à la machine travaillant automatiquement.

6. Procédé selon l'une des revendications 1 à 5, dans lequel les ordres de commande, envoyés par le dispositif de commande à la machine travaillant automatiquement, se réfèrent chacun à la sélection d'un outil d'usinage et de sa sollicitation par une force.

7. Procédé selon l'une des revendications 1 à 6, **caractérisé en ce que** les ordres de commande, envoyés à la machine travaillant automatiquement, se référent à la sélection d'un mandrin d'étalonnage pour opérer l'étalonnage des coussinets de palier.

8. Procédé selon l'une des revendications 1 à 7, dans laquelle la machine travaillant automatiquement comprend une pluralité de mandrins d'étalonnage de diamètres différents, la sélection d'un mandrin d'étalonnage déterminé s'effectuant en fonction de la cote réelle de la tige, telle que déterminée pour les pièces chaque fois assemblées pour former une articulation.

9. Procédé selon l'une des revendications 1 à 8, dans lequel un étalonnage des coussinets est effectué, à une valeur de consigne qui, par rapport à la cote réelle déterminée de la tige, correspond à une valeur inférieure, appropriée eu égard au couple souhaité ou à la résistance souhaitée.

10. Procédé selon la revendication 9, dans lequel la valeur inférieure de l'étalonnage du coussinet, par rapport à la cote réelle de la tige, est déterminée de manière que l'on associe à un diamètre de coussinet étalonné, toujours une grandeur pour la prise en considération simultanée de l'épaisseur de paroi de coussinet, qui est sélectionnée selon la distribution statistique.

11. Procédé selon l'une des revendications 1 à 10, pour lequel le matériau d'où sont constitués au moins en partie les coussinets de palier, est sélectionné parmi le groupe comprenant des matériaux à reprise de forme et des matériaux à mémoire.

12. Procédé selon la revendication 10, dans lequel la distance libre du coussinet en matériel susceptible de reprendre sa forme, est étalonnée à l'aide d'une cote excédentaire, caractéristique de l'obtention d'un couple souhaité, par rapport à la cote réelle de la tige, qui est sélectionnée de manière que, à partir de la reprise de forme des coussinets de palier, après écoulement d'un intervalle de temps prédéterminé, on obtienne une sous-dimension recherchée par rapport à la cote réelle de la tige.

13. Procédé selon l'une des revendications 1 à 12, dans lequel l'articulation fabriquée est une articulation de rotation.

14. Procédé selon l'une des revendications 1 à 12, dans lequel l'articulation fabriquée est une articulation de pivotement.

15. Procédé selon l'une des revendications 1 à 12, dans lequel l'articulation fabriquée est une charnière pour véhicule automobile.
